(19) Europäisches Patentamt
European Patent Office
Office européen des brevets

(11) EP 0 764 277 B1

(12) EUROPÄISCHE PATENTSCHRIFT

(45) Veröffentlichungstag und Bekanntmachung des Hinweises auf die Patenterteilung:
**01.08.2001 Patentblatt 2001/31**

(21) Anmeldenummer: **96909015.8**

(22) Anmeldetag: **04.04.1996**

(51) Int Cl.⁷: **G01S 7/40**, G01S 7/288

(86) Internationale Anmeldenummer:
**PCT/DE96/00600**

(87) Internationale Veröffentlichungsnummer:
**WO 96/31786 (10.10.1996 Gazette 1996/45)**

# (54) VERFAHREN ZUR BESTIMMUNG DER ZWISCHENFREQUENZABWEICHUNG BEI FREQUENZ-PULS-RADARSYSTEMEN

PROCESS FOR DETERMINING THE INTERMEDIATE FREQUENCY DEVIATION IN FREQUENCY PULSED RADAR SYSTEMS

PROCEDE DE DETERMINATION DE L'ECART DE FREQUENCE INTERMEDIAIRE DANS DES SYSTEMES RADAR A FREQUENCE PULSEE

(84) Benannte Vertragsstaaten:
**DE FR GB IT**

(30) Priorität: **06.04.1995 DE 19512904**

(43) Veröffentlichungstag der Anmeldung:
**26.03.1997 Patentblatt 1997/13**

(73) Patentinhaber: **DORNIER GmbH**
**88039 Friedrichshafen (DE)**

(72) Erfinder:
- **SPECK, Ralph**
  **D-88045 Friedrichshafen (DE)**
- **FLACKE, Joachim**
  **D-88677 Ittendorf (DE)**
- **KAISER, Bruno**
  **D-88090 Kippenhausen (DE)**

(74) Vertreter: **Meel, Thomas**
**Dornier GmbH**
**L H G**
**88039 Friedrichshafen (DE)**

(56) Entgegenhaltungen:
**FR-A- 2 571 909** **US-A- 5 036 327**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 764 277 B1

Printed by Jouve, 75001 PARIS (FR)

## Beschreibung

Die Erfindung betrifft ein Verfahren zur Bestimmung der Zwischenfrequenz-abweichung bei einem Frequenz-Puls-Radarsystem.

In Frequenz-Puls-Radarsystemen wird der Sendeoszillator durch Frequenzumtastung auch als Überlagerungsoszillator (LO) eingesetzt. Das prinzipielle Blockschaltbild eines solchen Radarsystems ist in Fig. 1 dargestellt und entspricht dem in der **DE 41 04 907** beschrieben System. Zur Sendepulserzeugung wird der Oszillator VCO innerhalb des Sendeintervalls $\tau$ auf die Sendefrequenz $f_s$ geschaltet, während er in der restlichen Zeit des Pulswiederholintervalls $T_p$ auf der LO-Frequenz $f_{LO}$ verbleibt. Zu weiteren Einzelheiten des in Fig. 1 gezeigten Systems wird auf die **DE 41 04 907** verwiesen.
Die Abb. (a) der Fig. 2 zeigt einen solchen zeitlichen Verlauf der Oszillatorfrequenz. Der entsprechende zeitliche Verlauf der Amplitude des Sendesignals und der Amplitude des LO-Signals (mit den Frequenzen $f_s$ bzw $f_{LO}$) sind den Abb. (b) und (c) der Fig. 2 zu entnehmen. Die Differenz zwischen Sende- und LO-Frequenz ($f_s$-$f_{LO}$) ist die Zwischenfrequenz ZF. Sie wird durch den Frequenzhub des Oszillators bestimmt.
Da ein Echosignal entsprechend der Zielentfernung R um Tz = 2R/c (c = Lichtgeschwindigkeit) verzögert wird (die Abb. (d) der Fig. 2 zeigt den zeitlichen Verlauf des Echosignals mit der Frequenz $f_s + f_{Doppler}$), kann dieses wieder im Radarsystem mit dem zwischenzeitlich auf LO-Frequenz umgeschalteten Sendeoszillator auf die Zwischenfrequenz ZF abgemischt werden. Der zeitliche Verlauf der Amplitude des zwischenfrequenten Echosignals, das hier durch eine Dopplerfrequenz bei bewegtem Ziel verschoben ist, zeigt Abb. (e) in Fig. 2.

Wie in der **DE 41 04 907** beschrieben, sind Sendesignal $f_s$ und LO-Signal ($f_{LO}$) kohärent, da sie durch Frequenzumtastung desselben Oszillators erzeugt werden. Die durch Mischung beider Signale erzeugten ZF-Impulse sind daher von Puls zu Puls (abgesehen von einer etwaigen Dopplerverschiebung) phasenstabil als auch kohärent zum Steuersignal (Pulswiederholungsfrequenz PRF), mit der die Frequenzumtastung erfolgt. Durch die Kohärenz von ZF und PRF kann das ZF-Signal mit Hilfe eines zur PRF kohärenten Referenzsignals $f_R$ kohärent in das Basisband abgemischt werden, wo durch Abtastung und Filterung das Dopplersignal aus den Phasendifferenzen zwischen ZF- und Referenzsignal ($f_R$) gewonnen werden kann (siehe auch Merill I. Skolnik: Introduction to Radar Systems. 2nd Edition 1980, pp. 117, Verlag McGraw-Hill, New-York).

Die Abtastung erfolgt in Entfernungszellen, deren Breite (Abtastzeit $T_A$) üblicherweise der Impulsbreite $\tau$ entspricht. Die Entfernungszellen sind zeitlich aneinandergereiht und jede Entfernungszelle gibt entsprechend ihrer Verzögerung bezüglich des Sendeimpulses einen bestimmten Entfernungsbereich wieder. Die Entfernungszellenbreite ist durch die Dauer der Abtastung ($T_A$) festgelegt und beschreibt die Entfernungsauflösung ($\Delta R$) des Radars ($\Delta R = c \cdot T_A/2$, c= Lichtgeschwindigkeit).

In Fig. 3 sind die zeitlichen Verläufe von Sendesignal, Echosignal und Anordnung der Entfernungszellen für ein Intervall der Impulswiederholungsfrequenz dargestellt. Das Sendesignal (a) hat die Impulsbreite $\tau$. Die mittlere Darstellung (b) ist ein Beispiel für ein Echosignal mit 5 Zielen in unterschiedlichen Abständen. Der Unterschied im Abstand muß größer sein als $T_A$, um die einzelnen Ziele als getrennte Objekte detektieren zu können. Die Entfernungszellen 1 bis n, die den gesamten Entfernungsmeßbereich abdecken, sind in Darstellung (c) gezeigt. In den jeweiligen Entfernungszellen entspricht der abgetastete Wert (Betrag des komplexen Echosignals in der Basisbandebene, $\sqrt{(I^2 + Q^2)}$) der Amplitude des Echosignals zum Abtastzeitpunkt, wie in Darstellung (d) der Fig. 3 gezeigt.

Für eine definierte Entfernungszelle, die ein sich relativ zum Radar bewegtes Ziel enthält, ist der Verlauf der Abtastwerte über einen längeren Zeitraum in Fig. 4 dargestellt. Das Ziel bewirkt eine Dopplerverschiebung, die durch die Einhüllende der Abtastwerte dargestellt wird. Die Abtastwerte haben einen zeitlichen Abstand von 1/PRF. Innerhalb der Abtastzeit $T_A$ ist die Änderung des Dopplersignals vernachlässigbar gering, da $1/T_A >> f_{Dmax}$ ($f_{Dmax}$ = maximale Dopplerfrequenz) gilt. Dies zeigt Fig. 5, in der zwei aufeinanderfolgende Abtastwerte einer Entfernungszelle dargestellt sind.

Wenn die Frequenz des zwischenfrequenten Echosignals und damit der Frequenzhub des Sendeoszillators von der üblicherweise quarzstabilen Referenzfrequenz $f_R$ abweicht, wird der Signal-Rauschabstand entsprechend reduziert. Die Auswirkung einer solchen Abweichung ist in Fig. 6 dargestellt. Durch die Überlagerung der ZF-Abweichung wird das Dopplersignal in der Amplitude reduziert. Die für ein bestimmtes Radar zulässige Frequenzabweichung hängt ausschließlich von der Dauer der Abtastung ($T_A$), der tolerierbaren Reduktion des Signal-Rauschabstandes und der Empfangstorbreite des Systems ab. So ist beispielsweise für einen Kreuzkorrelations-Empfänger (Matched Filter, $T_A=\tau$) bei einer erlaubten Verschlechterung von 1 dB des Signal-Rauschabstandes und einer Empfangstorbreite von 10 m eine ZF-Abweichung von weniger als 4 MHz zulässig. Gerade bei Radarsystemen im mm-Wellen-Bereich, wo im Regelfall freilaufende Oszillatoren mit relativ geringer Güte eingesetzt werden, ergeben sich Probleme mit der Frequenzstabilität. So muß für das genannte Beispiel mit einer 10 m breiten Entfernungszelle der Frequenzhub eines mm-Wellen-Oszillators, der z.B. von 76,4 GHz auf 76,6 GHz umgeschaltet wird und somit im System eine Zwischenfrequenz von 200 MHz erzielt, auf ± 2,5 % (= ± 4 MHz) genau eingestellt werden. Infolge von Bauteileschwankungen und Fertigungstoleranzen sowie Einflüssen von Temperatur und Alterungseffekten ist nicht nur ein Frequenzabgleich im Fertigungsprozeß, sondern auch eine Frequenzstabilisierung während des Betriebs erforderlich. Beide Maßnahmen können, insbesondere bei Systemen, die in großer Stückzahl produziert werden, zu erhöhtem Aufwand und damit höheren Kosten führen.

Der Effekt der Verschlechterung des Signal-Rauschabstands aufgrund der Abweichung der Zwischenfrequenz von der Referenzfrequenz $f_R$ wird anhand von Fig. 7 am Beispiel eines Kreuzkorrelationsempfängers erläutert. Das Prinzip des Kreuzkorrelationsempfängers ist z.B. in Merill I. Skolnik: Introduction to Radar Systems, 2nd Edition 1980, pp. 369 to 376, Verlag McGraw-Hill, New York, beschrieben. Dargestellt ist in Fig. 7 der durch die ZF-Abweichung bedingte zeitliche Verlauf des Videosignals (gestrichelt) und der Einfluß dieses Signals auf die Abtastung. Die hochfrequente Änderung innerhalb des Abtasttores (Entternungszelle) bestimmt den Inhalt des jeweiligen Tores.

In Fig. 8 sind unterschiedliche Zeitverläufe (a) bis (d) des Echosignals in einem einzelnen Abtasttor dargestellt, und zwar jeweils für die reellen Signale I und Q, vor der bei dem Kreuzkorrelationsempfänger bzw. Matched Filter erfoigenden Integration. Dabei liegen bei den Beispielen (a) bis (d) jeweils unterschiedlich starke Abweichungen der Zwischenfrequenz vom Sollwert vor. In Darstellung (a) ist der Idealfall dargestellt, d.h. die Zwischenfrequenz ist identisch mit der Referenzfrequenz. Das Korrelationsmaximum ergibt sich für diesen Fall zu

$$|U|_{max} = \sqrt{\left(\int_{t0}^{t0+\tau} I(t)dt\right)^2 + \left(\int_{t0}^{t0+\tau} Q(t)dt\right)^2} = \sqrt{(A\cdot\tau)^2 + 0^2} = A\cdot\tau$$

In den übrigen Darstellungen (b) bis (d) ist die Spannung bei I bzw. Q über die Pulsbreite - anders wie im Fall (a) - nicht mehr konstant. Dies resultiert aus einer Frequenzabweichung der Zwischenfrequenz von der Referenzfrequenz. Aus diesem Grund werden in den Beispielen (b) bis (d) auch die Korrelationsmaxima kleiner ais im Beispiel (a). In der folgenden Tabelle sind die Auswirkungen auf den Signal-Störabstand für die in Fig. 8 gezeigten Beispiele (a) bis (d) zusammengestellt.

| Darstellung | ZF-Abweichung | Korrelationsmaximum | Verlust von Signal-Rauschabstand in dB |
|---|---|---|---|
| (a) | 0 | $A\tau$ | 0 |
| (b) | $\frac{1}{4\tau}$ | $A\frac{2\tau}{\pi}\sqrt{2}$ | 1 |
| (c) | $\frac{1}{2\tau}$ | $A\frac{2\tau}{\pi}$ | 4 |
| (d) | $\frac{1}{\tau}$ | 0 | $\infty$ |

Die Schwierigkeit bei Frequenz-Puls-Radarsystemen mit einem Oszillator besteht insbesondere auch darin, daß sowohl die Sendefrequenz als auch die LO-Frequenz von einem Oszillator zeitsequentiell erzeugt werden. Beide Signale sind also nie gleichzeitig am Ausgang des Oszillators vorhanden. Systemintern ein ZF-Signal zu erzeugen, auf das geregelt werden könnte, wäre insbesondere bei mm-Wellen-Systemen sehr aufwendig und kostentreibend (z. B. Verzögerungselemente im mm-Wellen-Bereich).

Aufgabe der Erfindung ist es, ein Verfahren vorzuschlagen, womit auf einfache und kostengünstige Art und Weise die Abweichung der Zwischenfrequenz (ZF) vom Sollwert ($f_R$) (= Abweichung des Frequenzhubes vom Sollwert) bei einem Frequenz-Puls-Radarsystem gemäß der DE 41 04 907 gemessen werden kann.

Erfindungsgemäß wird die Aufgabe dadurch gelöst, daß die Information über die ZF-Abweichungen aus den normalen Echosignalen des Radarsystems ohne Zusatzeinrichtungen auf der HF-Seite (wie z.B. Verzögerungselementen) gewonnen wird. Das bedeutet. daß das Echosignal eines potentiellen Zieles mit Hilfe der Standardsignalverarbeitung in Entfernungszellen aufgeteilt und dopplergefiltert wird. Es steht dadurch mit ausreichendem S/N (Signal/Noise-Verhältnis) zur Verfügung. Die Aufteilung des Echoimpulses in Entfernungszellen erfolgt dabei durch zeitliche Abtastung des Echosignals. Wesentlich ist nun, daß das Echosignal eines einzelnen Ziels derart abgetastet wird, daß innerhalb eines Echoimpulses mehrere, z.B. n Abtastwerte liegen. Somit entstehen von ein und demselben Ziel n Dopplersignale gleicher Dopplerfrequenz. aus deren Phasendifferenzen sich die ZF-Abweichung (z.B. mittels FFT für $n = 2^k$) bestimmen läßt. Sofern die Filterbandbreiten vor der Abtasteinrichtung dies zulassen, können damit bei Abtastdauern $T_A$ und direkt aufeinanderfolgenden Abtastungen Frequenzabweichungen im Bereich von $\pm 1/(2 \cdot T_A)$ bestimmt werden.

Zur Erzeugung von n Abtastwerten innerhalb eines Echoimpulses bestehen folgende Möglichkeiten:

**1. Erhöhung der regulären Abtastrate (= 1 Abtastwert pro Entfernungszelle) um den Faktor n**

Von Vorteil bei diesem Verfahren sind die unveränderte Sendesignalform sowie der hohe Eindeutigkeitsbereich für die Frequenzmessung. Bei kompletter Abtastung des Echoimpulses mit n aufeinanderfolgenden Abtastwerten ist der Eindeutigkeitsbereich auf $\pm$ 1/(2 •$T_A$) beschränkt.

Nachteilig ist die um den Faktor n erhöhte Abtastfrequenz, was besonders bei Radarsystemen mit hoher Entfernungsauflösung zu hohen Abtastraten führt.

**2. Von Echopuls zu Echopuls um $T_A$ versetzte Abtastzeitpunkte**

Mit diesem Verfahren ergibt sich neben den Vorteilen von 1. eine unveränderte Abtastrate. Nachteilig wirkt sich u.U. die um den Faktor n reduzierte effektive PRF aus.

**3. Erzeugung eines vorübergehend breiteren Sendeimpulses der Dauer $\tau$ = k •$T_A$, so daß sich das Echosignal eines Zieles über k reguläre Entfernungszellen der Breite $\Delta$R = c •$T_A/_2$ und damit über k reguläre Abtastzeitpunkte erstreckt**

Von Vorteil bei diesem Verfahren ist die unveränderte Abtastung im Empfänger. Nachteilig kann sich die Erzeugung einer zusätzlichen Sendesignalform erweisen. Der Eindeutigkeitsbereich ist dabei auf zu $\pm$ 1/(2•$T_A$) beschränkt.

Abhängig vom jeweiligen Anwendungsfall können die oben beschriebenen Verfahren einzeln oder in Kombination angewendet werden, um die Abweichung der Zwischenfrequenz vom Sollwert zu bestimmen. Nach der Berechnung der ZF-Abweichung kann diese dann durch entsprechende Korrektur des Frequenzhubes des Sende-/Überlagerungs-Oszillators in einem geschlossenen Regelkreis auf einem Minimum gehalten werden.

Die drei Verfahrensalternativen gemäß Ziffer 1.2.3 werden im einzelnen anhand der Fig. 9 näher erläutert. Dabei zeigt Abb. (a) einen Echoimpuls der Breite $\tau$ und Abb. (b) das Ergebnis der bekannten Abtastung mit der Abtastrate = 1/$T_A$ entsprechend Fig. 3(d). Abb. (c) betrifft die Ausführung des erfindungsgemäßen Verfahrens entsprechend Ziffer 1. Gegenüber der regulären Abtastrate nach Abb. (b) wurde die Abtastrate um den Faktor 4 erhöht. Dadurch können Änderungen innerhalb der Pulsbreite $T_A$= t/4 (vgl. Fig. 8) eindeutig abgetastet werden.
Die Abb. (d) bis (g) betreffen die Ausführung des erfindungsgemäßen Verfahrens entsprechend Ziffer 2. In dieser Ausführung sind die Abtastzeitpunkte von Echoimpuls zu Echoimpuis um $\tau$/4 versetzt. In dem gezeigten Fall müssen 4 Perioden vergehen, ehe die 4 Abtastwerte des Echosignals vorliegen. Das bedeutet, daß das Echosignal über diese Zeit unverändert bleiben muß. Die effektive Pulswiederholfrequenz PRF ist um den Faktor 4 reduziert.
Die Abb. (h) bis (i) betreffen die Ausführung des erfindungsgemäßen Verfahrens entsprechend Ziffer 3. Abb. (h) zeigt dabei den verbreiterten Echoimpuls aufgrund des um den Faktor 4 verbreiterten Sendeimpulses. In diesem Fall kann die reguläre Abtastung wie in Darstellung (b) beibehalten werden. Wie in Abb. (i) gezeigt, werden aufgrund der vierfachen Echoimpulslänge jedoch 4 Abtastwerte pro Echoimpuls erzeugt.

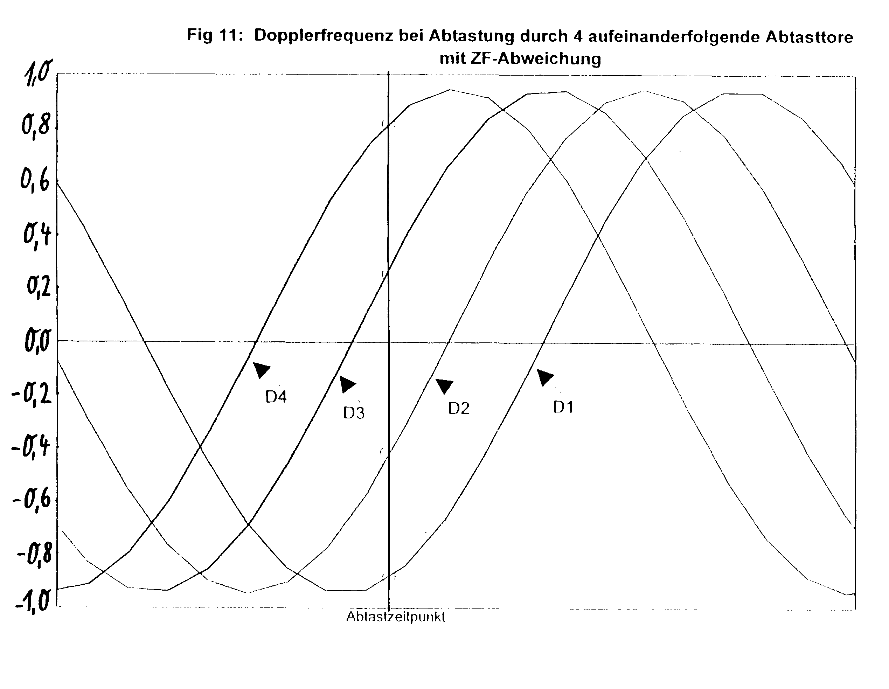

Ein Beispiel für die Abtastung eines Echoimpulses mit 4 aufeinanderfolgenden Entfernungszellen ist in Fig. 10 dargestellt, und zwar für das Beispiel aus Fig. 6 (d.h. ZF-Abweichung verschiedne von Null). Die Abtastwerte liegen innerhalb des Echoimpulses. Durch diese Abtastung erhält man von ein und demselben Ziel 4 Dopplersignale, die die gleiche Dopplerfrequenz, aber eine Phasenverschiebung gegeneinander aufweisen, die durch die ZF-Verschiebung und die zeitlichen Abstände der Entfernungszellen festgelegt ist.
Diese 4 Dopplersignale D1, D2. D3, D4 sind in Fig. 11 dargestellt. Aus der Phasenabweichung und der Kenntnis der Abtasttorlängen kann auf die ZF-Abweichung geschlossen werden. Dieser Zusammenhang wird im folgenden rechnerisch hergeleitet.

<u>Bestimmung der ZF-Abweichung $\Delta$ZF = ZF - $f_R$ aus der Phasenverschiebung von zeitlich nacheinander abgetasteten Dopplersignalen</u>

Das Echosignal in der ZF-Ebene mit einer Dopplerfrequenz $f_D$ läßt sich beschreiben als

$$E_{ZF}(t) = E_o \cdot e^{j(\omega_{ZF} + \omega_D)\cdot t}$$

$$\omega_{ZF} = 2\pi \cdot ZF$$

$$\omega_D = 2\pi\ f_D.$$

Das Referenzsignal mit der Frequenz $f_R$ kann dargestellt werden als

$$R(t) = R_o \cdot e^{j\omega_R \cdot t}$$

$$\omega_R = 2\pi\ f_R.$$

Mit diesen beiden Eingangssignalen kann das Videosignal hinter dem I/Q-Demodulator beschrieben werden als

$$U_v(t) = U_o \cdot e^{j\ (\omega_{ZF}+\omega_D-\omega_R)\cdot t}.$$

Die ZF-Abweichung in diesem Signal ist

$$\omega_{ZF} - \omega_R = 2\pi\ (ZF - f_R) = 2\pi \cdot \Delta ZF = \Delta\omega_{ZF}.$$

Aus (4) und (5) folgt für das Videosignal

$$U_v = U_o e^{j(\Delta\omega_{ZF}+\omega_D)\ t}.$$

Die Abtastung des Videosignals erfolgt zu unterschiedlichen Zeitpunkten, die um den Abstand $\Delta T$ gegeneinander verschoben sind.
Für zwei aufeinanderfolgende Signale (1,2) gilt

$$U_{v1}(t) = U_o e^{j(\Delta\omega_{ZF}+\omega_Z)\cdot t}$$

$$U_{v2}(t) = U_o e^{j(\Delta\omega_{ZF}+\omega_Z r(t+\Delta T)}.$$

Die Phasen der beiden Dopplersingnale sind:

$$\varnothing_1(t) = (\Delta\omega_{ZF} + \omega_D)\cdot t$$

$$\varnothing_2(t) = (\Delta\omega_{ZF} + \omega_D)\cdot(t+ \Delta T).$$

Die Differenz der Phasen zu einem beliebigen Zeitpunkt ist

$$\Delta\varnothing = \varnothing_2(t) - \varnothing_1(t) = (\Delta\omega_{ZF} + \omega_D)\cdot\Delta T.$$

Unter Berücksichtigung der Tatsache, daß für ein Frequenz-Puls-Radarsystem die relevante ZF-Abweichung (MHz-Bereich) sehr viel größer ist als die Dopplerverschiebung des Echosignals (kHZ-Bereich), da die ZF-Ebene weit oberhalb der Dopplerfrequenzebene liegen muß,

$$\Delta\omega_{ZF} >> \omega_D$$

läßt sich für die Phasenänderung mit ausreichender Genauigkeit schreiben :

$$\Delta\varnothing = \Delta\omega_{ZF}\cdot\Delta T.$$

Die ZF-Abweichung ΔZF ergibt sich dann aus der Änderung der Phase über der Zeit

$$\frac{\Delta\varnothing}{\Delta T} = \frac{\Delta\omega_{ZF}\cdot\Delta T}{\Delta T} = \Delta\omega_{ZF} = 2\pi\cdot\Delta ZF.$$

Für ΔZF folgt aus (12)

$$\Delta ZF = \frac{1}{2\pi}\cdot\frac{\Delta\varnothing}{\Delta T}.$$

## Patentansprüche

1. Verfahren zur Bestimmung der Abweichung der Zwischenfrequenz (ZF) von einer vorgegebenen Referenzfrequenz ($f_R$) bei einem Frequenz-Puls-Radarsystem, bei dem ein Sendeoszillator durch Frequenz-Umtastung auch als Überlagerungsoszillator (LO) für den Empfang des Echosignals eingesetzt wird, und die Zwischenfrequenz (ZF) als Differenz zwischen Sende- und LO-Frequenz durch den Frequenzhub des Oszillators bestimmt ist, gekennzeichnet durch folgende Verfahrensschritte:

   - zeitliche Abtastung des Echosignals derart, daß vom Echoimpuls eines einzelnen Ziels mehrere Abtastwerte an unterschiedlichen, bevorzugt äquidistanten Zeitpunkten innerhalb des Echoimpulses gewonnen werden;
   - Dopplerfilterung über die so gewonnenen Abtastwerte eines einzelnen Ziels, so daß von demselben Ziel mehrere Dopplersignale gleicher Frequenz gewonnen werden, aus deren Phasendifferenzen die Zwischenfrequenz-Abweichung bestimmt wird.

2. Verfahren nach Anspruch 1, dadurch gekennzeichnet, daß mehrere Abtastwerte vom Echoimpuls eines einzelnen Ziels dadurch gewonnen werden, daß bei unveränderter Sendesignalform die Abtastrate erhöht wird.

3. Verfahren nach Anspruch 1, dadurch gekennzeichnet, daß mehrere Abtastwerte vom Echoimpuls eines einzelnen Ziels dadurch gewonnen werden, daß bei unveränderter Sendesignalform die Abtastzeitpunkte von Echoimpuls zu Echoimpuls des Ziels um die Zeitdauer: Sendeimpulsbreite/Anzahl der Abtastwerte versetzt werden.

4. Verfahren nach Anspruch 1, dadurch gekennzeichnet, daß mehrere Abtastwerte vom Echoimpuls eines einzelnen Ziels dadurch gewonnen werden, daß durch eine Verlängerung der Sendeimpulsbreite ein verlängerter Echoimpuls erzeugt wird, der sich über mehrere Abtastzeitpunkte erstreckt.

5. Verfahren nach einem der vorangehenden Ansprüche, dadurch gekennzeichnet, daß die Bestimmung der Zwischenfrequenz-Abweichung mit Hilfe einer FFT über die Phase der Dopplerspektrallinien nach der Dopplerfilterung durchgeführt wird.

6. Verfahren nach einem der vorangehenden Ansprüche, dadurch gekennzeichnet, daß die ermittelte Zwischenfrequenz-Abweichung zur Korrektur des Frequenzhubs des Frequenz-Puls-Radarsystems verwendet wird, um die Zwischenfrequenz-Abweichung auf ein Minimum zu regeln.

## Claims

1. Method for determining the deviation in the intermediate frequency (ZF) from a prescribed reference frequency ($f_R$) in a frequency pulsed radar system, in which a transmission oscillator is also used by means of frequency shift keying as local oscillator (LO) for receiving the echo signal, and the intermediate frequency (ZF) is determined as the difference between the transmit frequency and LO frequency by the frequency deviation of the oscillator, characterized by the following method steps:

   - time sampling of the echo signal in such a way that a plurality of samples at different, preferably equidistant instants with in the echo pulse are obtained from the echo pulse of a single target;
   - Doppler filtering over the samples of a single target thus obtained such as to obtain from the same target a plurality of Doppler signals of the same frequency from whose phase differences the intermediate frequency deviation is determined.

2. Method according to Claim 1, characterized in that a plurality of samples are obtained from the echo pulse of a single target by increasing the sampling rate in conjunction with an unchanged transmitted signal shape.

3. Method according to Claim 1, characterized in that a plurality of samples are obtained from the echo pulse of a single target, in conjunction with an unchanged transmitted signal shape, by offsetting the sampling instants from echo pulse to echo pulse of the target by the duration: transmission pulse width/number of samples.

4. Method according to Claim 1, characterized in that a plurality of samples of the echo pulse of a single target are obtained by generating a lengthened echo pulse, which extends over a plurality of sampling instants, by lengthening the transmission pulse width.

5. Method according to one of the preceding claims, characterized in that the intermediate frequency deviation is determined with the aid of an FFT over the phase of the Doppler spectral lines after the Doppler filtering.

6. Method according to one of the preceding claims, characterized in that the determined intermediate frequency deviation is used to correct the frequency deviation of the frequency pulsed radar system in order to control the intermediate frequency deviation to a minimum.

**Revendications**

1. Procédé de détermination de la déviation de fréquence intermédiaire (ZF) par rapport à une fréquence de référence prédéterminée ($f_R$) dans un système radar à fréquence pulsée, dans lequel un oscillateur d'émission est également mis en oeuvre par changement de fréquence comme oscillateur d'interférence (LO) pour la réception du signal écho, et la fréquence intermédiaire (ZF) est définie par élévation de la fréquence de l'oscillateur comme différence entre fréquence d'émission et fréquence LO, caractérisé par les étapes suivantes du procédé :

   - lecture périodique du signal écho de manière à acquérir plusieurs valeurs de lecture à divers instants, de préférence équidistants, de l'impulsion écho d'une cible unique à l'intérieur de l'impulsion écho ;
   - filtrage Doppler sur les valeurs de lecture d'une cible unique ainsi acquises de manière à acquérir plusieurs signaux Doppler de même fréquence de la même cible dont les différences de phases définissent la déviation de fréquence intermédiaire.

2. Procédé selon la revendication 1, caractérisé en ce que plusieurs valeurs de lecture de l'impulsion écho d'une cible unique sont acquises du fait de l'augmentation de la fréquence de lecture en conservant la même forme de signal d'émission.

3. Procédé selon la revendication 1, caractérisé en ce que plusieurs valeurs de lecture de l'impulsion écho d'une cible unique sont acquises du fait du décalage de l'instant de lecture d'impulsion écho en impulsion écho de la cible d'une durée : largeur d'impulsion d'émission/nombre de valeurs de lecture, en conservant la même forme de signal d'émission.

4. Procédé selon la revendication 1, caractérisé en ce que plusieurs valeurs de lecture de l'impulsion écho d'une cible unique sont acquises du fait que l'allongement de la largeur d'impulsion d'émission engendre un allongement de l'impulsion écho qui s'étend sur plusieurs instants de lecture.

5. Procédé selon l'une des revendications précédentes, caractérisé en ce que la définition de la déviation de fréquence intermédiaire est assurée au moyen d'une FFT sur la phase des lignes spectrales Doppler après filtrage Doppler.

6. Procédé selon l'une des revendications précédentes, caractérisé en ce que la déviation de fréquence intermédiaire trouvée est utilisée pour la correction de l'élévation de fréquence du système radar à fréquence pulsée de manière à régler la déviation de fréquence intermédiaire sur un minimum.

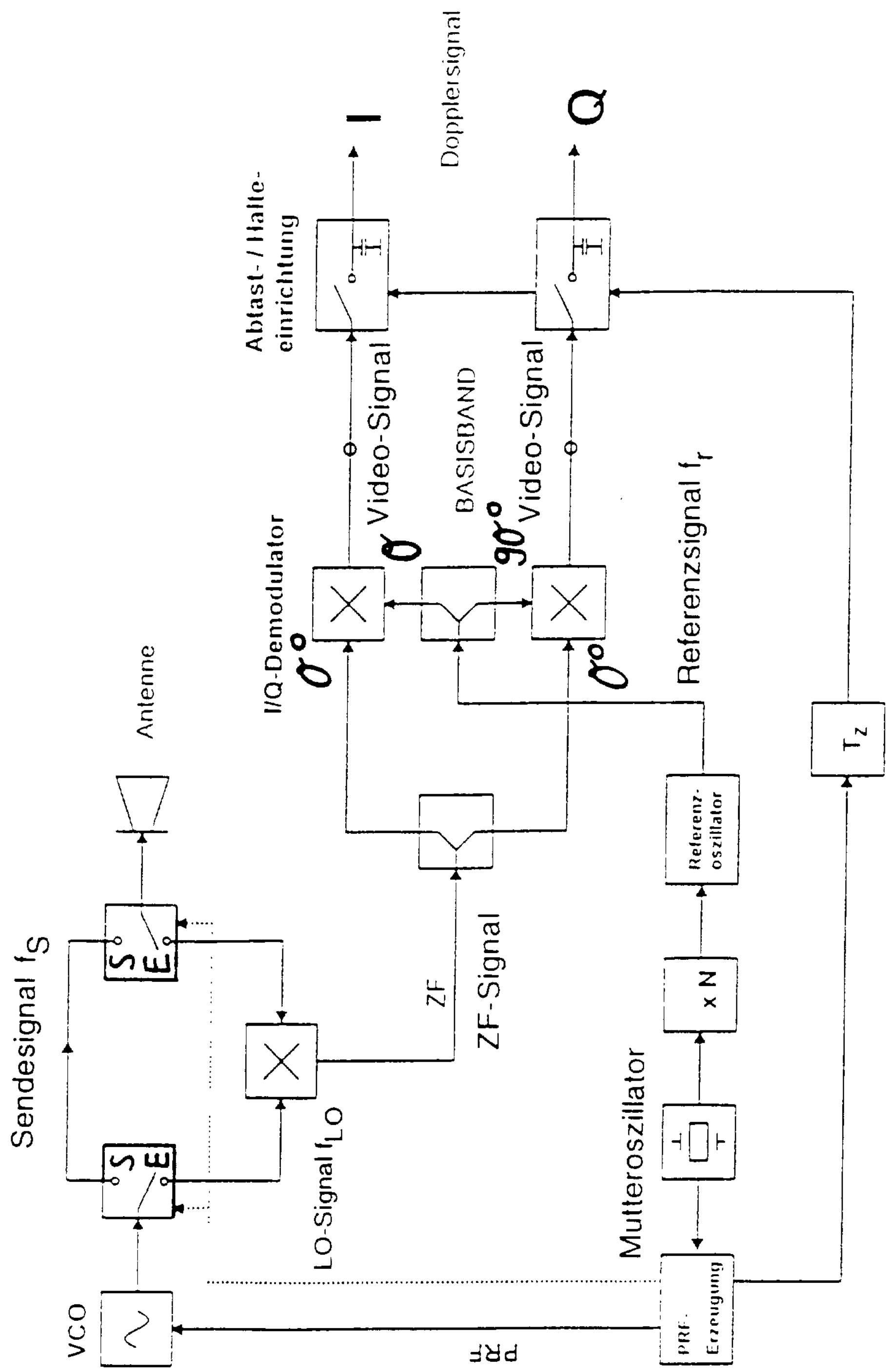


Fig 1: Prinzipielles Blockschaltbild Frequenz-Puls-Radar-System

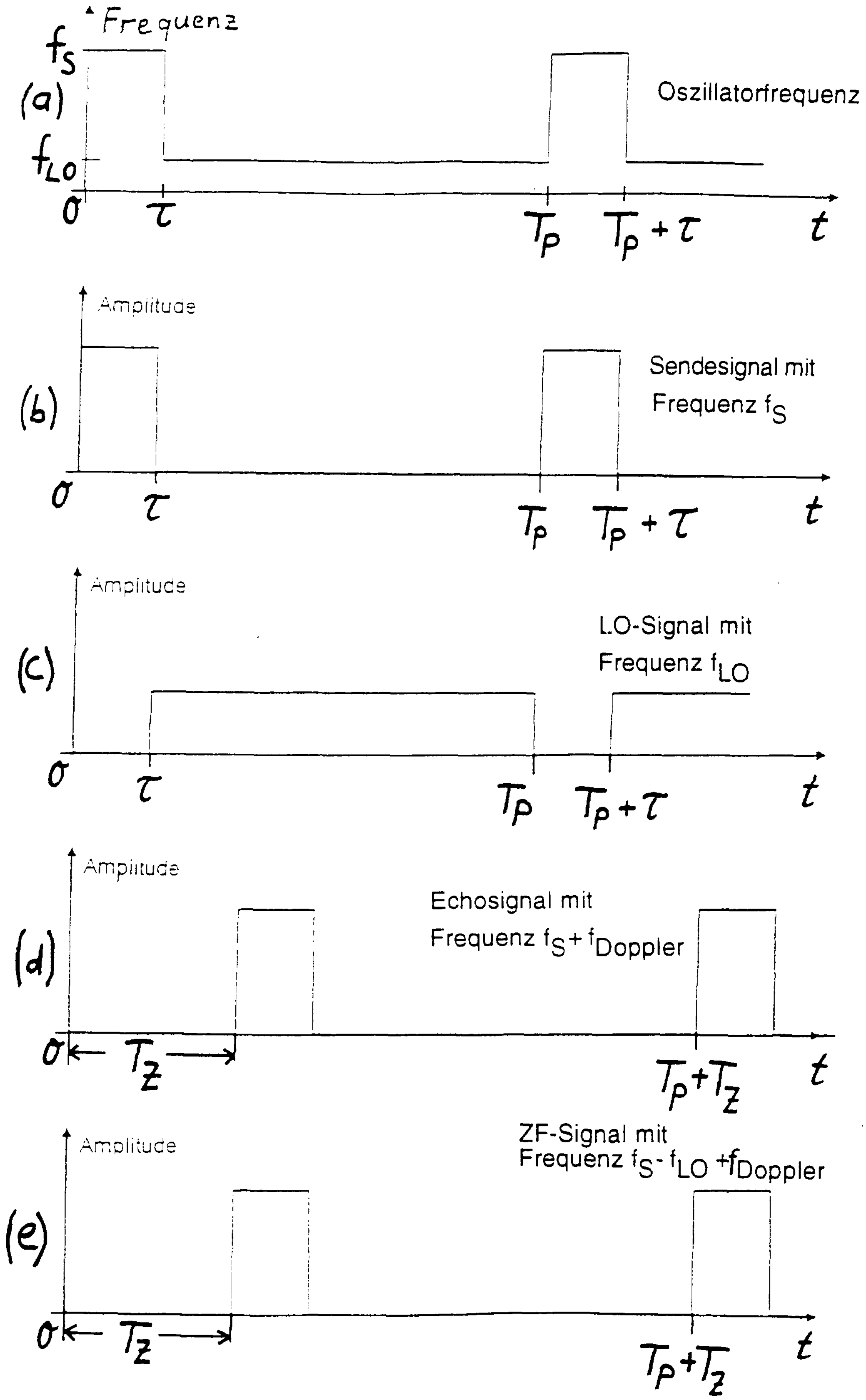


Fig 1: Zeitverläufe bei Frequenz-Puls Radarsystemen

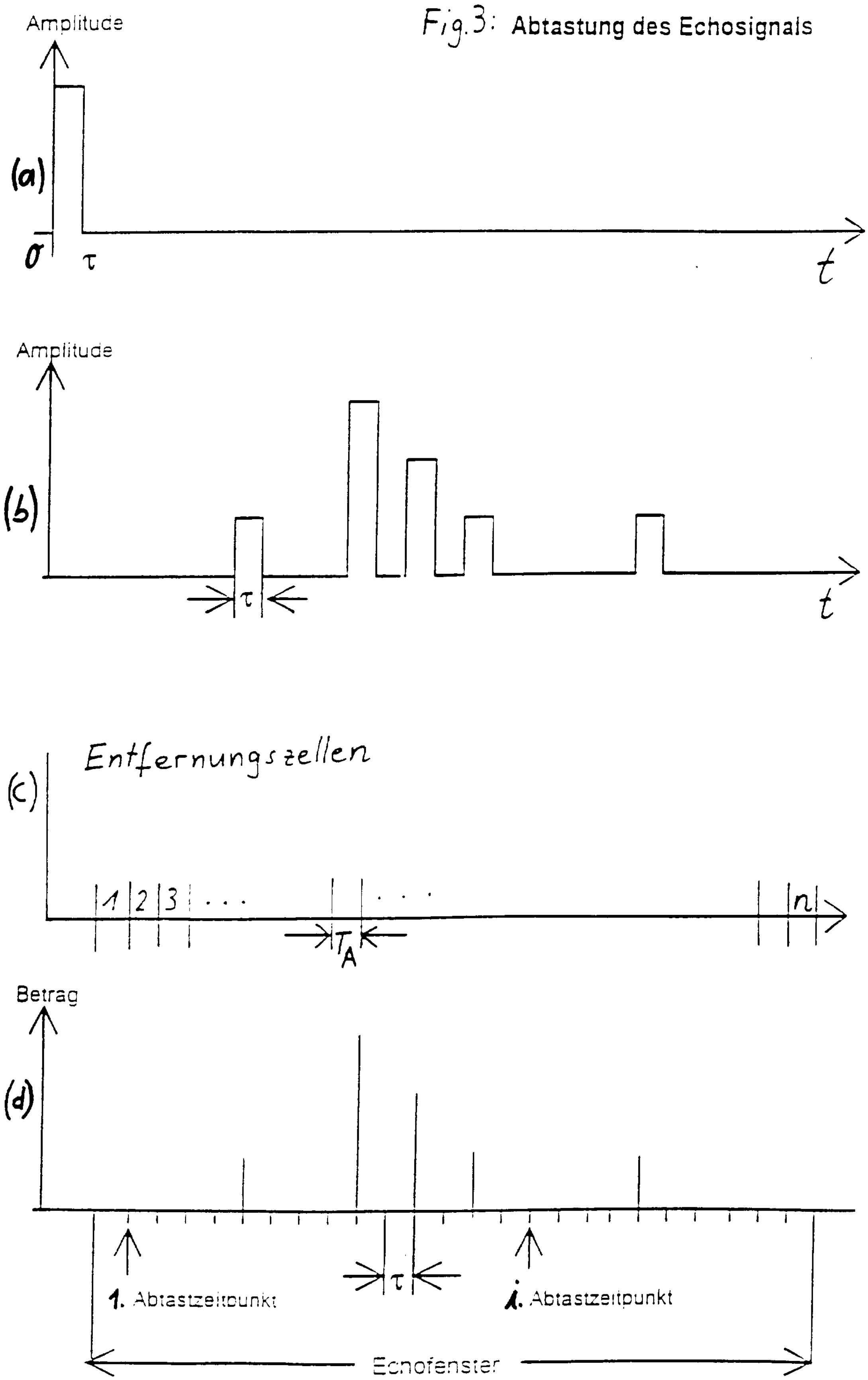
Fig. 3: Abtastung des Echosignals
Amplitude
(a)
0
τ
t
Amplitude
(b)
τ
t
Entfernungszellen
(c)
1
2
3
. . .
. . .
n
$T_A$
Betrag
(d)
1. Abtastzeitpunkt
τ
i. Abtastzeitpunkt
Echofenster

Fig 4: Dopplerfrequenz ohne ZF-Abweichung

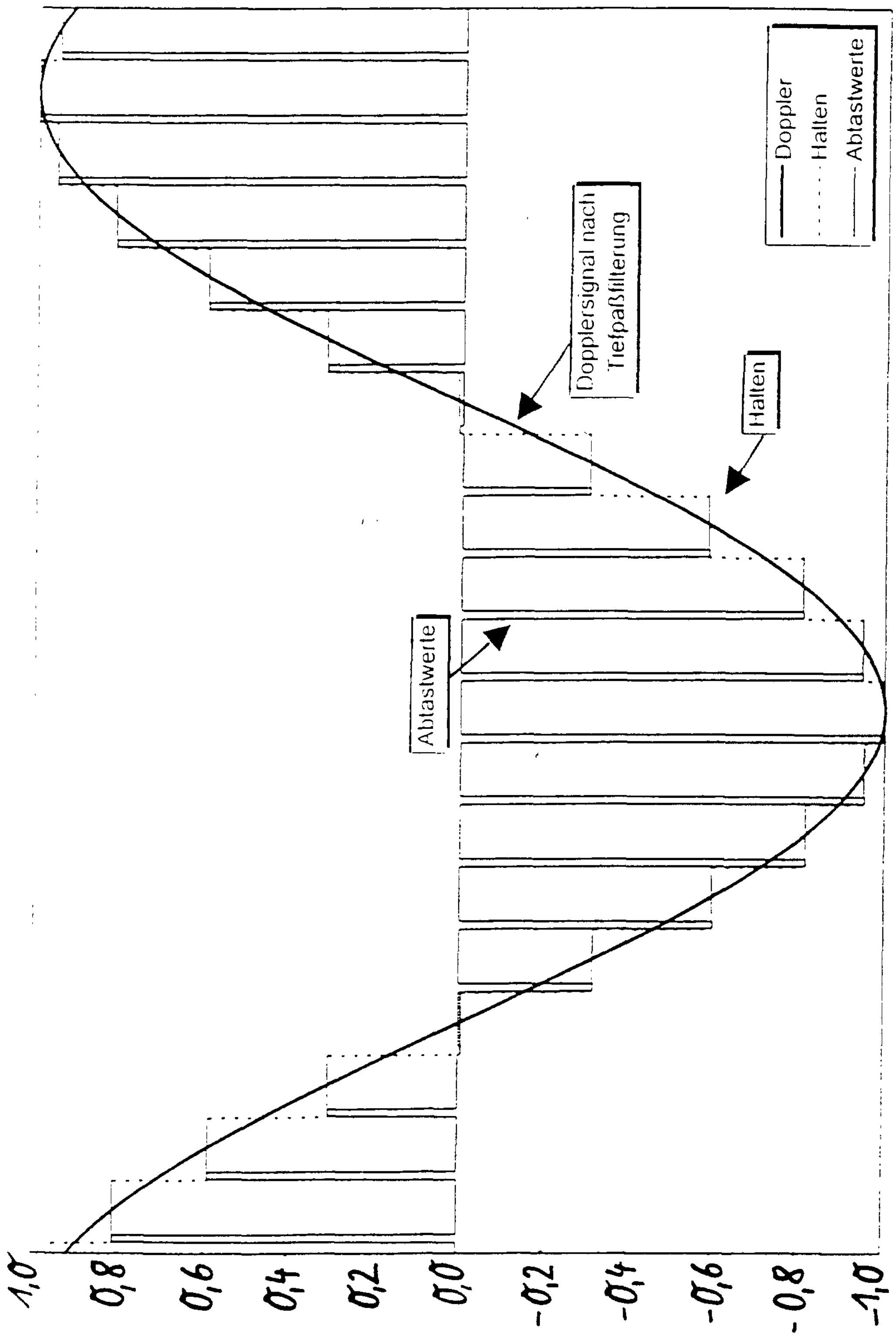

Fig 5: Abtastung ohne ZF-Abweichung

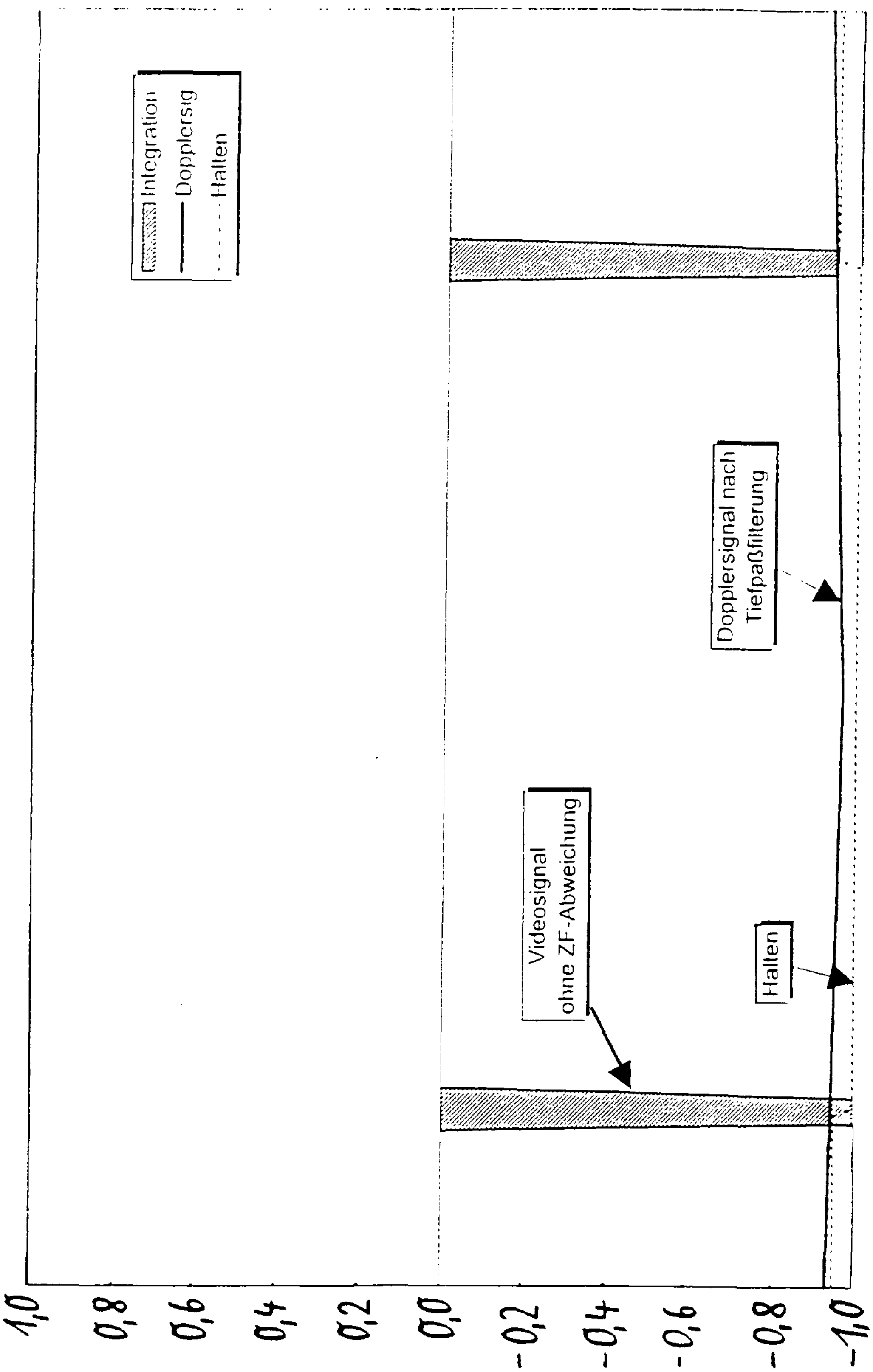

**Fig 6: Dopplersignal infolge ZF-Abweichung**

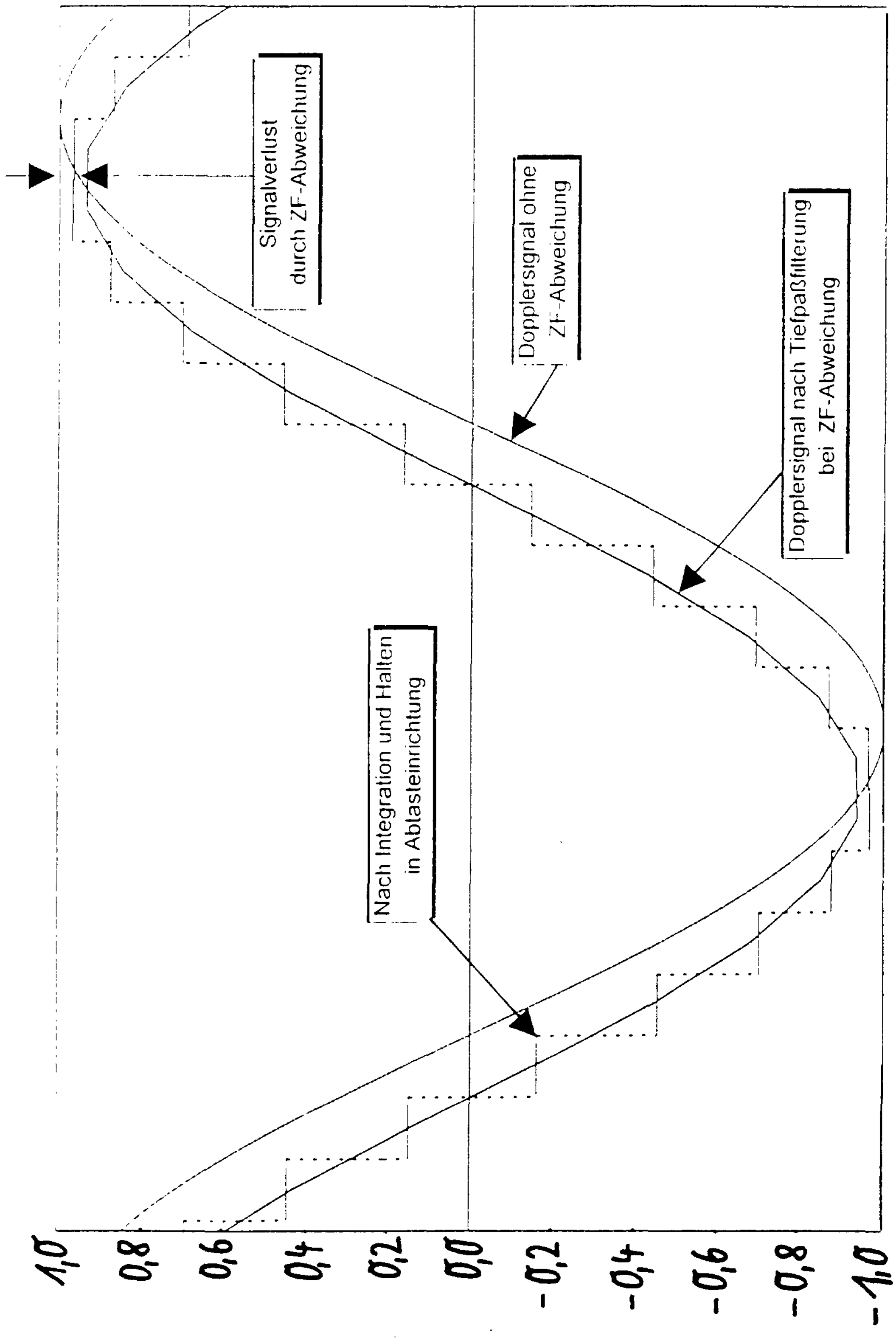

**Fig 7: Zeitlicher Verlauf des Videosignals während der Abtastung bei ZF-Abweichung**

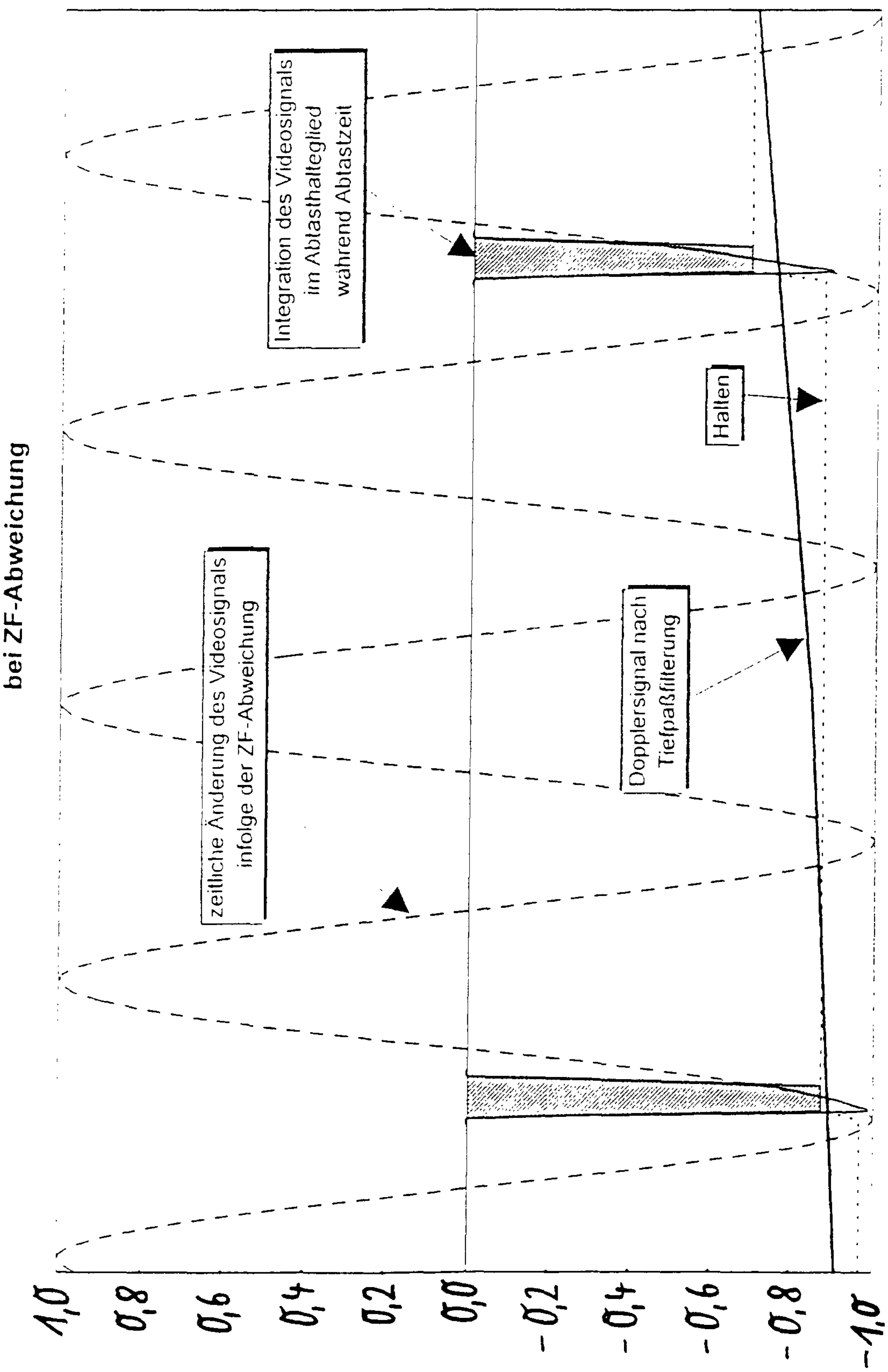

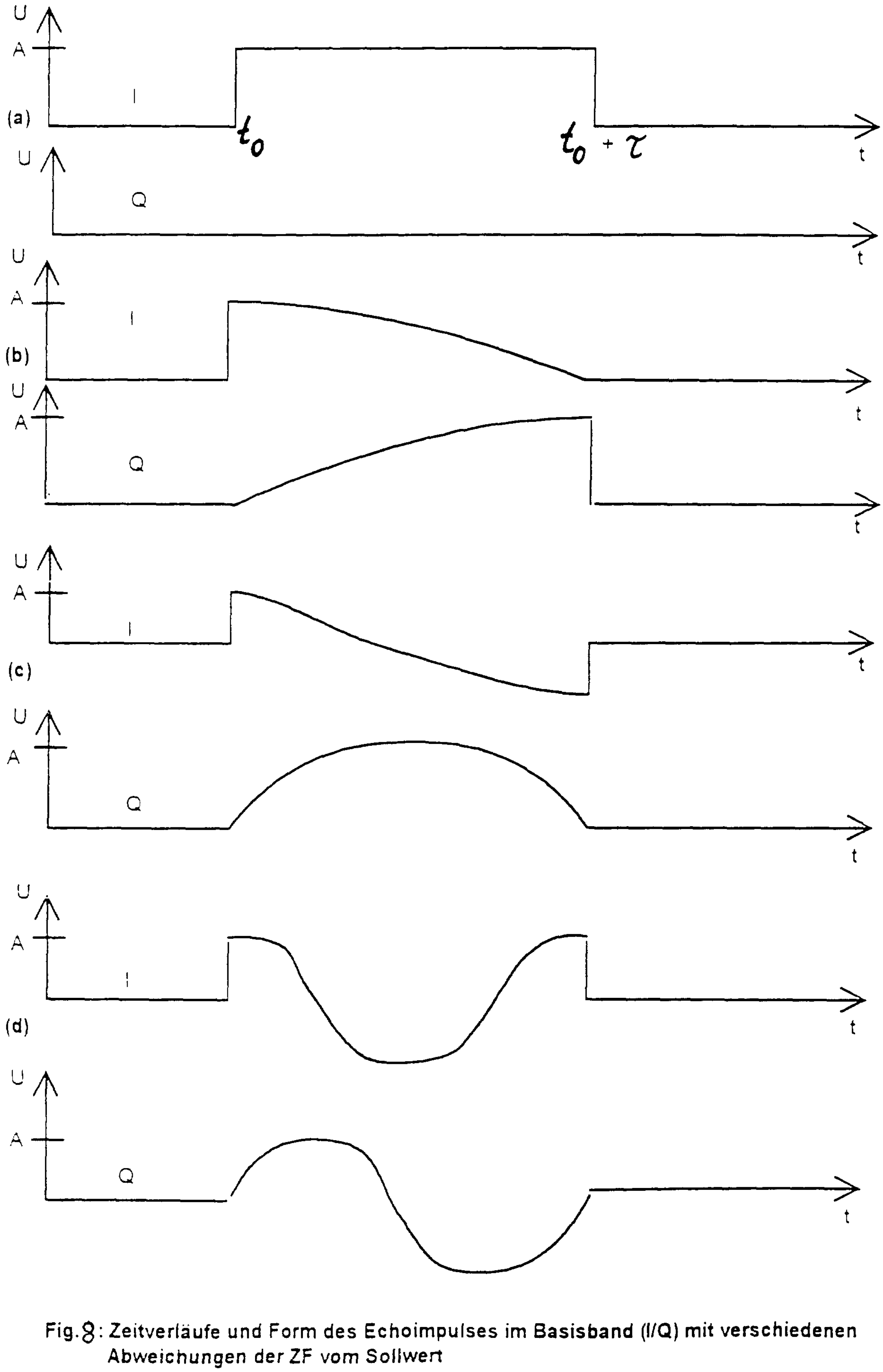


Fig. 8: Zeitverläufe und Form des Echoimpulses im Basisband (I/Q) mit verschiedenen Abweichungen der ZF vom Sollwert

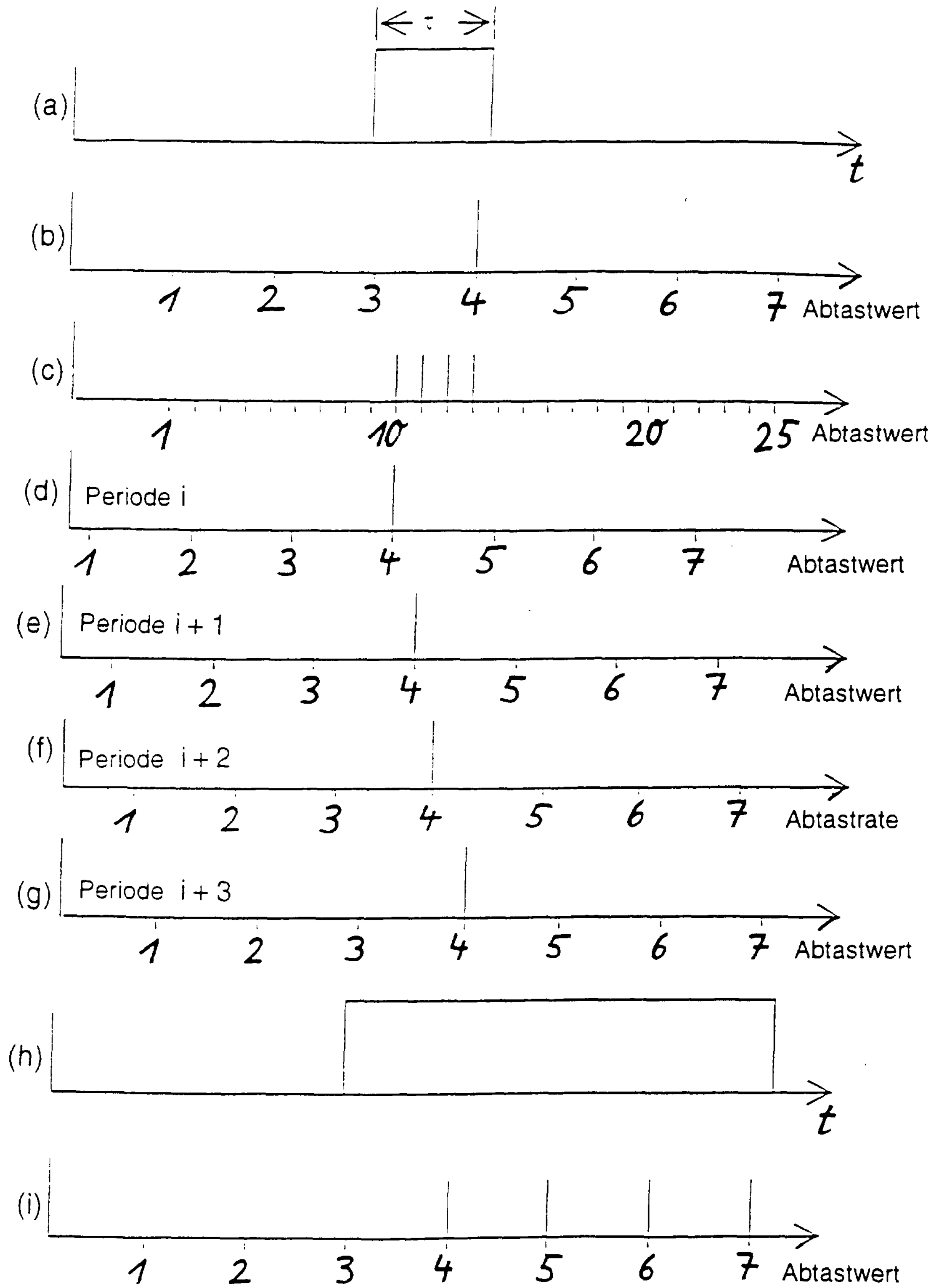


Fig. 9: Erzeugung von Abtastwerten

Fig 10: Abtastung eines Echoimpulses mit 4 Abtasttoren

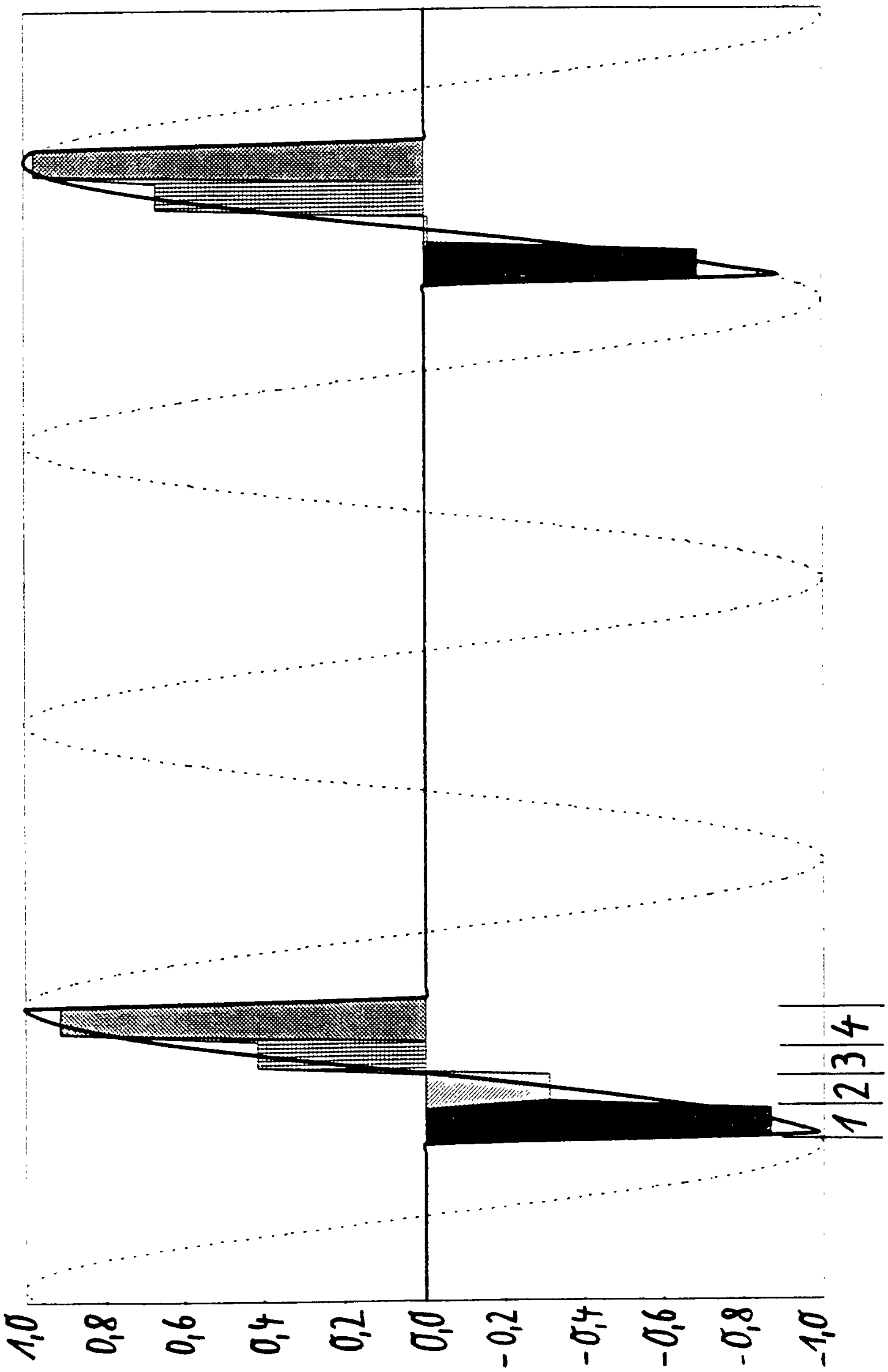

Fig 11: Dopplerfrequenz bei Abtastung durch 4 aufeinanderfolgende Abtasttore mit ZF-Abweichung